# EUROPÄISCHE PATENTSCHRIFT

(11) **EP 3 566 905 B1**
(45) Veröffentlichungstag und Bekanntmachung des Hinweises auf die Patenterteilung: **09.09.2020**
(21) Anmeldenummer: 18171039.3
(22) Anmeldetag: 07.05.2018
(51) Int. Cl.: B60R 3/02, A61G 3/06

(54) **PERSONENBEFÖRDERUNGSFAHRZEUG**
PASSENGER TRANSPORT VEHICLE
VÉHICULE DE TRANSPORT DE PERSONNES

(43) Veröffentlichungstag der Anmeldung: 13.11.2019
(73) Patentinhaber: MAGNA STEYR Fahrzeugtechnik AG & Co KG, 8041 Graz (AT)
(72) Erfinder: HÖRMANN, Reinhard, 8151 Hitzendorf (AT)
(74) Vertreter: Zangger, Bernd

(56) Entgegenhaltungen:
- WO-A1-96/16860
- WO-A1-03/066380
- JP-A- 2003 182 457

## Beschreibung

### Gebiet der Erfindung

Die vorliegende Erfindung betrifft ein Personenbeförderungsfahrzeug, umfassend eine Schiebetür und eine Trittstufe.

### Stand der Technik

Fahrzeuge, die eine Schiebetür und eine Trittstufe zum leichteren Ein- und Aussteigen in das Fahrzeug umfassen sind bereits bekannt. So können beispielsweise in Lastkraftwagen die Führerhäuser oder in Personenbeförderungsfahrzeugen wie Autobussen die Innenräume für Passagiere über Schiebetüren einfach zugänglich sein und/oder auch unterhalb der Türen Trittstufen angebracht sein, die den Zutritt erleichtern. Auch ist es schon bekannt Trittstufen schräg nach außen verlaufend absenken zu können, so dass diese beispielsweise als Rollstuhlrampen verwendet werden können.

Aus der US 3,572,754 ist eine Fahrzeugkarosserie bekannt mit einer Türöffnung und einer Tür, die einen Teil der Öffnung verschließt und mit einer unter der Tür angeordneten schwenkbaren Stufen- und Plattformanordnung.

Die DE 10 2010 026 255 A1 offenbart eine Aufstieganordnung für ein Kraftfahrzeug, insbesondere für ein Fahrerhaus eines Lastkraftwagens, mit einem Aufstieg mit einer Mehrzahl von übereinander angeordneten Trittstufen, und mit einer zumindest im Wesentlichen oberhalb des Aufstiegs angeordneten Tür, wobei die Tür als Schiebetür ausgebildet ist.

Die WO 96/16860 A1 offenbart ein Personenbeförderungsfahrzeug mit vereinfachtem Einstieg bzw. Ausstieg mittels einer Rampe.

### Zusammenfassung der Erfindung

Es ist eine Aufgabe der Erfindung, ein Personenbeförderungsfahrzeug anzugeben, das einen verbesserten Schutz von Passagieren bei Seitencrashs, also bei seitlich aufprallenden Unfällen, bietet.

Die Lösung der Aufgabe erfolgt durch ein Personenbeförderungsfahrzeug, umfassend eine Schiebetür und eine Trittstufe, wobei die Trittstufe in einem deaktivierten Zustand unterhalb der Schiebetür vertikal angeordnet ist und wobei die Trittstufe in einem aktivierten Zustand unterhalb der Schiebetür im Wesentlichen horizontal und/oder schräg nach unten angeordnet ist, so dass die Trittstufe als Stufe und/oder als Rampe zum Zutritt in das Personenbeförderungsfahrzeug durch die Schiebtür verwendbar ist, wobei das Personenbeförderungsfahrzeug eine erste vertikale Karosseriesäule umfasst, wobei die Trittstufe im deaktivierten Zustand außerhalb der vertikalen Karosseriesäulen so angeordnet ist, dass die Trittstufe im deaktivierten Zustand bei einer von außen einwirkenden Kraft an der ersten vertikalen Karosseriesäule abgestützt ist.

Erfindungsgemäß wird ein als Trittstufe dienendes, seitlich am Fahrzeug angebrachtes Element gleichzeitig als effizientes Mittel zur Erhöhung der passiven Fahrzeugsicherheit genutzt. Die Trittstufe kann daher einerseits in einem aktivierten Zustand in eine horizontale oder schräge Position gebracht werden, die den Zutritt bzw. Ausgang aus dem Fahrzeug erleichtert. Die selbe Trittstufe wird erfindungsgemäß im deaktivierten Zustand, also insbesondere während der Fahrt des Personenbeförderungsfahrzeugs, als seitliches Schutzelement bei Unfällen genutzt. Dazu befindet sich in der Nähe der Schiebetür, beispielsweise links, rechts oder mittig an der Schiebetür, zumindest eine vertikale Karosseriesäule. Die Trittstufe ist dann vom Fahrzeug und insbesondere von der vertikalen Säule aus gesehen "außen" angeordnet, so dass sie bei einem seitlichen Aufprall von außen gegen die Karosseriesäulen gedrückt und an dieser abgestützt wird. Für eine derartige unfallsichere Abstützung ist beispielsweise ein üblicher Türrahmen eines Fahrzeugs nicht stabil genug, so dass eine stabile vertikale Karosseriesäule verwendet wird.

Die Trittstufe ist im deaktivierten Zustand außerhalb der vertikalen Karosseriesäule so angeordnet, dass die Trittstufe in einer seitlichen Ansicht die erste vertikale Karosseriesäule überragt. Ein einfacher Befestigungspunkt der Trittstufe an der vertikalen Säule, beispielsweise über ein Scharnier, der nicht für ein stabiles Abstützen der Trittstufe in einer Unfallsituation ausgelegt ist, reicht für ein erfindungsgemäßes Abstützen der Trittstufe im deaktivierten Zustand bei einer von außen einwirkenden Kraft an der ersten vertikalen Karosseriesäule nicht aus.

Erfindungsgemäß umfasst das Personenbeförderungsfahrzeug eine zweite vertikale Karosseriesäule, wobei die Trittstufe im deaktivierten Zustand außerhalb der vertikalen Karosseriesäulen so angeordnet ist, dass die Trittstufe im deaktivierten Zustand bei einer von außen einwirkenden Kraft an der ersten und an der zweiten vertikalen Karosseriesäule abgestützt ist. Erfindungsgemäß ist die erste vertikale Karosseriesäule an einer ersten Seite der Schiebetür angeordnet, zum Beispiel links, und die zweite vertikale Karosseriesäule an einer der ersten Seite gegenüberliegenden zweiten Seite der Schiebtür, zum Beispiel rechts, angeordnet.

Die Trittstufe ist dann so angeordnet, dass sie bei einem seitlichen Aufprall von außen gegen die Karosseriesäulen gedrückt und an diesen abgestützt wird. Die Breite des Trittbretts bzw. der Trittstufe in Fahrzeuglängsrichtung muss dazu entsprechend groß sein.

Die Trittstufe ist im deaktivierten Zustand außerhalb der vertikalen Karosseriesäulen so angeordnet, dass die Trittstufe in einer seitlichen Ansicht die erste und die zweite vertikale Karosseriesäule überragt. Vorzugsweise ist die Trittstufe aus einem hochfesten Material hergestellt, insbesondere aus einem hochfesten Metall. Die Trittstufe kann aus dem selben Material hergestellt sein, wie die vertikalen Karosseriesäulen.

Bevorzugt ist die Schiebetür zweiflügelig ausgebildet, sodass der erste Flügel in Richtung zur ersten Seite der Schiebetür hin öffnet und der zweite Flügel zur zweiten Seite der Schiebtür hin öffnet.

Das Personenbeförderungsfahrzeug umfasst bevorzugt einen Mechanismus, durch welchen die Trittstufe beim Öffnen der Schiebtür automatisiert vom deaktivierten Zustand in den aktivierten Zustand bewegt wird und/oder einen Mechanismus, durch welchen die Trittstufe beim Schließen der Schiebtür automatisiert vom aktivierten Zustand in den deaktivierten Zustand bewegt wird.

Die Trittstufe kann in einem aktivierten Zustand auf eine Höhe abgesenkt sein, die zwischen der Höhe eines Innenbodens des Personenbeförderungsfahrzeugs und der Höhe eines umgebenden Straßenniveaus liegt. Zusätzlich oder alternativ kann die Trittstufe in einem aktivierten Zustand auch auf der Höhe des Innenbodens des Personenbeförderungsfahrzeugs liegen.

### Kurzbeschreibung der Zeichnungen

Die Erfindung wird im Folgenden beispielhaft unter Bezugnahme auf die Zeichnungen beschrieben.
- Fig. 1: ist eine dreidimensionale Darstellung eines erfindungsgemäßen Personenbeförderungsfahrzeugs, mit deaktivierter Trittstufe.
- Fig. 2: ist eine dreidimensionale Darstellung des erfindungsgemäßen Personenbeförderungsfahrzeugs gemäß Fig. 1, mit aktivierter Trittstufe in einer ersten Variante.
- Fig. 3: ist eine dreidimensionale Darstellung des erfindungsgemäßen Personenbeförderungsfahrzeugs gemäß Fig. 1, mit aktivierter Trittstufe in einer zweiten Variante.
- Fig. 4: ist eine dreidimensionale Darstellung des erfindungsgemäßen Personenbeförderungsfahrzeugs gemäß Fig. 1, mit aktivierter Trittstufe in einer dritten Variante.
- Fig. 5: ist eine Vorderansicht des Personenbeförderungsfahrzeugs gemäß Fig. 4.

### Detaillierte Beschreibung der Erfindung

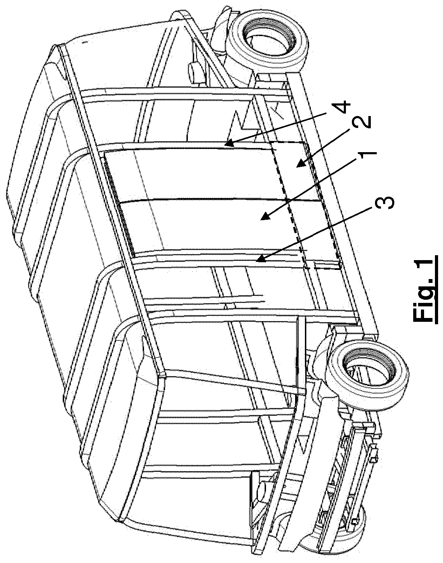

In Fig. 1 ist ein erfindungsgemäßes Personenbeförderungsfahrzeug dargestellt, welches eine Schiebetür 1 umfasst, mit einem linken Flügel der nach links und einem rechten Flügel der nach rechts öffnet. Durch die Schiebetür 1 ist der Zugang zum Innenraum des Personenbeförderungsfahrzeugs möglich. Das Personenbeförderungsfahrzeug umfasst ferner eine Trittstufe 2, die in Fig. 1 in einem deaktivierten Zustand dargestellt ist, wobei die Trittstufe 2 unterhalb der Schiebetür 1 vertikal angeordnet ist. Die Trittstufe 2 besteht aus einem hochfesten Material, beispielsweise aus Stahl.

Das Personenbeförderungsfahrzeug umfasst zur Stabilisierung mehrere Karosserieelemente, die über die Seitenwände des Fahrzeuges und über das Fahrzeugdach, bevorzugt auch über den Fahrzeugboden, reichen, so dass die Karosserieelemente im Wesentlichen vollständige oder abschnittsweise Ringe, Rechtecke oder Quadrate um das Personenbeförderungsfahrzeug bilden. Diese Karosserieelemente bilden auch eine erste vertikale Karosseriesäule 3 an einer ersten Seite der Schiebetür 1, nämlich links der Schiebetür 1, aus und eine zweite vertikale Karosseriesäule 4 an einer der ersten Seite gegenüberliegenden zweiten Seite der Schiebtür 1, nämlich rechts der Schiebetür 1 aus. Mit "gegenüberliegend" ist dabei gemeint, dass die zweite vertikale Säule 4 in Bezug auf eine vertikale Mittelachse der Schiebetür 1 auf der anderen horizontalen Seite der Schiebetür 1 angeordnet ist, als die erste vertikale Säule 3. Bevorzugt ist die erste vertikale Säule 3 in einem linken Endabschnitt der Trittstufe 2 und die zweite vertikale Säule 4 in einem rechten Endabschnitt der Trittstufe 2 angeordnet.

Die Trittstufe 2 ist im deaktivierten Zustand außerhalb der vertikalen Karosseriesäulen 3, 4 - also vom Fahrzeuginneren gesehen außen - so angeordnet, dass die Trittstufe 2 bei einer von außen einwirkenden Kraft an der ersten und an der zweiten vertikalen Karosseriesäule 3 und 4 abgestützt ist. Bei einem Umfall stützt sich also die Trittstufe 2 auf die Karosseriesäulen 3 und 4 auf und bildet dadurch einen wirksamen Insassenschutz.

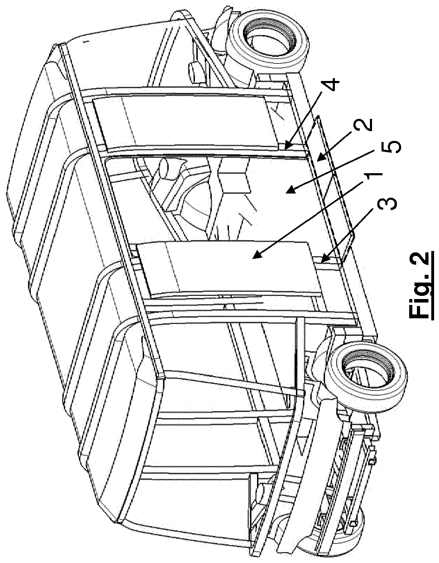

Das Personenbeförderungsfahrzeug umfasst einen Mechanismus, durch welchen die Schiebetür 1 geöffnet werden kann und dabei die Trittstufe 2 automatisiert vom deaktivierten Zustand in den aktivierten Zustand bewegt, insbesondere geklappt bzw. geschwenkt werden kann, der in Fig. 2 dargestellt ist.

Dabei sind die Flügel der Schiebetür 1 zur ersten Seite und zur zweiten Seite hin geöffnet und die Trittstufe 2 ist nach unten geklappt und somit in ihrer Funktion als Trittstufe "aktiviert". Die Trittstufe 2 ist dabei unterhalb der Schiebetür 1 im Wesentlichen horizontal angeordnet, so dass die Trittstufe 2 als Stufe zum Zutritt in das Personenbeförderungsfahrzeug durch die Schiebtür 1 verwendbar ist.

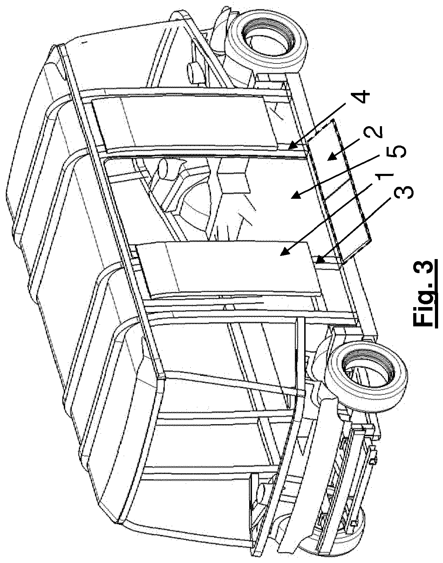

Alternativ oder bevorzugt zusätzlich kann die Trittstufe auch in die in Fig. 3 dargestellte Position verfahren werden. Die Trittstufe 2 ist dabei schräg, an ihrem äußeren Ende nach unten geneigt, so dass sie eine Rampe bildet, insbesondere für einen leichteren Zugang in das Fahrzeug mittels Rollstuhl oder zur einfacheren Be- und Entladung von Gütern.

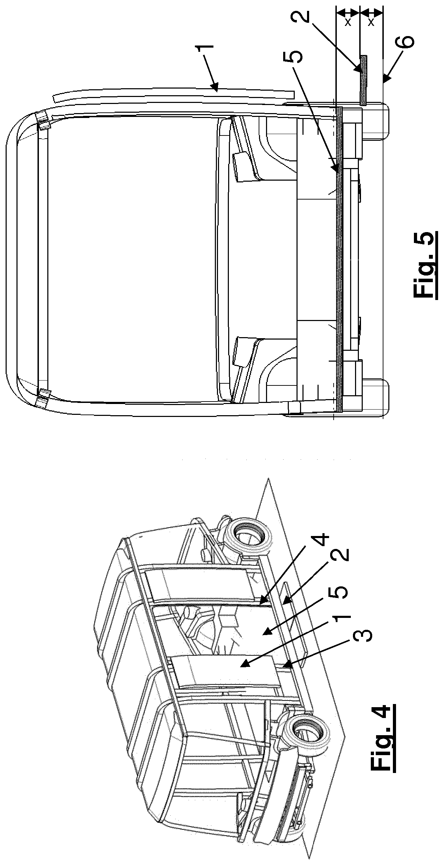

Die Trittstufe 2 kann in einem aktivierten Zustand, wie in Fig. 4 und Fig. 5 dargestellt, auch auf eine Höhe abgesenkt werden, die zwischen der Höhe des Innenbodens 5 des Personenbeförderungsfahrzeugs und der Höhe des umgebenden Straßenniveaus 6 liegt um den Eintritt und Austritt aus dem Fahrzeug noch weiter zu vereinfachen. Beispielsweise kann die aktivierte Trittstufe 2 auf halber Höhe liegen, so dass der Abstand x zum Innenbodens 5 etwa gleich ist dem Abstand x zum Straßenniveau.

### Bezugszeichenliste

- 1: Schiebetür
- 2: Trittstufe
- 3: erste vertikale Karosseriesäule
- 4: zweite vertikale Karosseriesäule
- 5: Innenbodens
- 6: Straßenniveau

- x: Abstand

## Patentansprüche

1. Personenbeförderungsfahrzeug, umfassend eine Schiebetür (1) und eine Trittstufe (2), wobei die Trittstufe (2) in einem deaktivierten Zustand unterhalb der Schiebetür (1) vertikal angeordnet ist und wobei die Trittstufe (2) in einem aktivierten Zustand unterhalb der Schiebetür (1) im Wesentlichen horizontal und/oder schräg nach unten angeordnet ist, so dass die Trittstufe (2) als Stufe und/oder als Rampe zum Zutritt in das Personenbeförderungsfahrzeug durch die Schiebtür (1) verwendbar ist,
wobei das Personenbeförderungsfahrzeug eine erste vertikale Karosseriesäule (3) umfasst, wobei das Personenbeförderungsfahrzeug eine zweite vertikale Karosseriesäule (4) umfasst, wobei die Trittstufe (2) im deaktivierten Zustand außerhalb der vertikalen Karosseriesäulen (3, 4) so angeordnet ist, dass die Trittstufe (2) im deaktivierten Zustand bei einer von außen einwirkenden Kraft an der ersten und an der zweiten vertikalen Karosseriesäule (3, 4) abgestützt ist, wobei die erste vertikale Karosseriesäule (3) an einer ersten Seite der Schiebetür (1) angeordnet ist und die zweite vertikale Karosseriesäule (4) an einer der ersten Seite gegenüberliegenden zweiten Seite der Schiebtür (1) angeordnet ist, und wobei die Trittstufe (2) im deaktivierten Zustand außerhalb der vertikalen Karosseriesäulen (3, 4) so angeordnet ist, dass die Trittstufe (2) in einer seitlichen Ansicht die erste und die zweite vertikale Karosseriesäule (3, 4) überragt.

2. Personenbeförderungsfahrzeug nach Anspruch 1, wobei die Trittstufe (2) aus einem hochfesten Material hergestellt ist.

3. Personenbeförderungsfahrzeug nach zumindest einem der vorhergehenden Ansprüche,
wobei die Schiebetür (1) zweiflügelig ausgebildet ist, sodass der erste Flügel in Richtung zur ersten Seite der Schiebetür (1) hin öffnet und der zweite Flügel zur zweiten Seite der Schiebtür (1) hin öffnet.

4. Personenbeförderungsfahrzeug nach zumindest einem der vorhergehenden Ansprüche,
wobei das Personenbeförderungsfahrzeug einen Mechanismus umfasst, durch welchen die Trittstufe (2) beim Öffnen der Schiebtür (1) automatisiert vom deaktivierten Zustand in den aktivierten Zustand bewegt wird und/oder einen Mechanismus umfasst, durch welchen die Trittstufe (2) beim Schließen der Schiebtür (1) automatisiert vom aktivierten Zustand in den deaktivierten Zustand bewegt wird.

5. Personenbeförderungsfahrzeug nach zumindest einem der vorhergehenden Ansprüche,
wobei die Trittstufe (2) in einem aktivierten Zustand auf eine Höhe abgesenkt ist, die zwischen der Höhe eines Innenbodens (5) des Personenbeförderungsfahrzeugs und der Höhe eines umgebenden Straßenniveaus (6) liegt.

## Claims

1. Passenger transport vehicle, comprising a sliding door (1) and a foot-step (2), wherein the foot-step (2) in a deactivated state is arranged vertically below the sliding door (1), and wherein the foot-step (2) in an activated state is arranged substantially horizontally and/or obliquely downwards below the sliding door (1) such that the foot-step (2) can be used as a step and/or as a ramp for entry into the passenger transport vehicle through the sliding door (1), wherein the passenger transport vehicle comprises a first vertical body pillar (3), wherein the passenger transport vehicle comprises a second vertical body pillar (4), wherein the foot-step (2) in the deactivated state is arranged outside the vertical body pillars (3, 4) in such a manner that the foot-step (2) in the deactivated state is supported on the first and on the second vertical body pillars (3, 4) when a force acts from the outside, wherein the first vertical body pillar (3) is arranged on a first side of the sliding door (1) and the second vertical body pillar (4) is arranged on a second side of the sliding door (1) opposite the first side, and wherein the foot-step (2) in the deactivated state is arranged outside the vertical body pillars (3, 4) in such a manner that the foot-step (2) in a lateral view protrudes beyond the first and the second body pillars (3, 4).

2. Passenger transport vehicle according to Claim 1, wherein the foot-step (2) is produced from a high-strength material.

3. Passenger transport vehicle according to at least one of the preceding claims, wherein the sliding door (1) is formed with two leaves such that the first leaf opens in the direction towards the first side of the sliding door (1) and the second leaf opens towards the second side of the sliding door (1) .

4. Passenger transport vehicle according to at least one of the preceding claims, wherein the passenger transport vehicle comprises a mechanism, by means of which the foot-step (2) is moved from the deactivated state into the activated state in an automated manner during the opening of the sliding door (1), and/or comprises a mechanism, by means of which the foot-step (2) is moved from the activated state into the deactivated state in an automated manner during the closing of the sliding door (1).

5. Passenger transport vehicle according to at least one of the preceding claims, wherein the foot-step (2) in an activated state is lowered to a height which lies between the height of an interior floor (5) of the passenger transport vehicle and the height of a surrounding road level (6).

## Revendications

1. Véhicule de transport de personnes, comprenant une porte coulissante (1) et un marchepied (2), le marchepied (2) étant agencé dans un état désactivé verticalement en dessous de la porte coulissante (1) et le marchepied (2) étant agencé dans un état activé essentiellement horizontalement et/ou incliné vers le bas en dessous de la porte coulissante (1), de telle sorte que le marchepied (2) puisse être utilisé en tant que marche et/ou en tant que rampe pour l'accès dans le véhicule de transport de personnes au travers de la porte coulissante (1),
le véhicule de transport de personnes comprenant une première colonne de carrosserie verticale (3), le véhicule de transport de personnes comprenant une deuxième colonne de carrosserie verticale (4), le marchepied (2) étant agencé dans l'état désactivé à l'extérieur des colonnes de carrosserie verticales (3, 4) de telle sorte que le marchepied (2) soit supporté dans l'état désactivé en cas d'une force agissant depuis l'extérieur sur la première et sur la deuxième colonne de carrosserie verticale (3, 4), la première colonne de carrosserie verticale (3) étant agencée sur un premier côté de la porte coulissante (1) et la deuxième colonne de carrosserie verticale (4) étant agencée sur un deuxième côté de la porte coulissante (1) opposé au premier côté, et le marchepied (2) étant agencé dans l'état désactivé à l'extérieur des colonnes de carrosserie verticales (3, 4) de telle sorte que le marchepied (2) dépasse de la première et de la deuxième colonne de carrosserie verticale (3, 4) dans une vue latérale.

2. Véhicule de transport de personnes selon la revendication 1, dans lequel le marchepied (2) est fabriqué en un matériau hautement résistant.

3. Véhicule de transport de personnes selon au moins l'une quelconque des revendications précédentes, dans lequel la porte coulissante (1) est configurée à double battant, de telle sorte que le premier battant s'ouvre dans la direction du premier côté de la porte coulissante (1) et que le deuxième battant s'ouvre du deuxième côté de la porte coulissante (1).

4. Véhicule de transport de personnes selon au moins l'une quelconque des revendications précédentes, dans lequel le véhicule de transport de personnes comprend un mécanisme, par lequel le marchepied (2) est déplacé automatiquement de l'état désactivé dans l'état activé lors de l'ouverture de la porte coulissante (1), et/ou comprend un mécanisme, par lequel le marchepied (2) est déplacé automatiquement de l'état activé dans l'état désactivé lors de la fermeture de la porte coulissante (1) .

5. Véhicule de transport de personnes selon au moins l'une quelconque des revendications précédentes, dans lequel le marchepied (2) est abaissé dans un état activé à une hauteur qui se situe entre la hauteur d'un plancher intérieur (5) du véhicule de transport de personnes et la hauteur d'un niveau de rue environnant (6) .
